# EUROPEAN PATENT APPLICATION

(11) **EP 2 362 464 A1**
(43) Date of publication of application: **31.08.2011**
(21) Application number: 11155791.4
(22) Date of filing: 24.02.2011
(51) Int. Cl.: H01M 2/10, H01M 10/50, B60K 1/04

(54) **Battery cooling/heating structure for a battery module**

(30) Priority: 25.02.2010 JP 2010040048; 26.02.2010 JP 2010041986
(71) Applicant: Sanyo Electric Co., Ltd., Osaka 570-8677 (JP)
(72) Inventor: Itsuki, Hiroyuki, Moriguchi-shi, Osaka 570-8677 (JP)
(74) Representative: Glawe, Delfs, Moll

(57) **Abstract**

A battery cooling/heating structure (2) having a plate (30) that is brought into contact with a battery (10) to cool and heat the battery, including a medium pipe (33) of plural arrays (33a, 33b, 33c, 33d) that are arranged substantially in parallel on the plate and through which refrigerant medium flows to cool the battery, each of the plural arrays having a straight portion, and a heater (40) that is disposed between the straight portions of the plural arrays of the medium pipe and to which current is supplied to heat the battery through the plate, the medium pipe and the heater being integrally arranged within the same plane of the plate.

## Description

### BACKGROUND OF THE INVENTION

### 1. Field of the Invention

The present invention relates to a battery cooling/heating structure for a battery mounted in a hybrid vehicle or electric vehicle using an electric motor as a driving source, and a battery module having the battery cooling/heating structure.

### 2. Description of the Related Art

An assembled battery is constructed by assembling plural batteries. In order to prevent deterioration of this type assembled battery, a plate is mounted on the assembled battery, and refrigerant for a car air conditioner or a dedicated refrigerator is made to flow through this plate, thereby cooling the assembled battery. Furthermore, in order to prevent reduction of the output (power) of the assembled battery, a heater is attached to the plate so that the assembled battery can be heated, and current is supplied to the heater to heat the plate so that heat is transferred from the plate to the assembled battery and the assembled battery is heated when outdoor air temperature is low. There is known a cooling/heating structure in which the plate is cooled/heated as described above and the temperature control of the assembled battery is performed by using this plate (for example, see JP-A-2008-181733).

In this type cooling/heating structure, the heater is fixed to the back side of the plate by plural metal bands or the like. However, according to this fixingmethod, the contact thermal resistance between the plate and the heater increases, and thus the plate cannot be efficiently heated. Therefore, a heater plate for receiving heat of the heater and a cooling plate for receiving heat of refrigerant medium are formed of different plates, and these plates are stacked to form a cooling/heating plate, thereby reducing the contact thermal resistance (for example, see JP-A-2000-95198).

With respect to a battery mounted in a hybrid vehicle or an electrical vehicle, in order to increase the running distance of a vehicle, it is required to load a larger number of batteries in a limited space, and a cooling/heating structure mounted in the battery is required to be miniaturized. However, the cooling/heating plate constructed by stacking the heater plate and the cooling plate is increased in size. Accordingly, with respect to an in-vehicle mount type battery module for which a mount space is limited, when this cooling/heating plate is mounted on the battery, it affects the number of batteries to be loaded.

Furthermore, in the structure that the heater plate and the cooling plate are stacked, when a refrigerant pipe provided in the cooling plate is not filled with refrigerant medium and heater is supplied with current under a state that the refrigerant pipe has a cavity therein, there is a problem that the thermal conduction efficiency is low and the plate cannot be efficiently heated. Furthermore, when the heater is supplied with current under a state that liquid refrigerant medium is stocked in the refrigerant pipe provided to the refrigerant plate, there is also a problem that the liquid refrigerant serves as a thermal load and the heating efficiency of the plate is lowered.

Still furthermore, when the operation of the vehicle is stopped, the car air conditioner or the dedicated refrigerator is stopped. Therefore, the liquid refrigerant remaining in the plate continues to vaporize due to heat of the assembled battery, and the vapor refrigerant is discharged from the plate into the refrigerant pipe. However, when the outdoor air temperature is low, the vapor refrigerant in the refrigerant pipe is re-condensed in the refrigerant pipe. Furthermore, when the plate is located at a lower position than the refrigerant pipe, the re-condensed refrigerant returns into the plate due to its own weight, so that the liquid refrigerant is kept to be stocked in the plate. Even when the plate is disposed in the vehicle so as to be located at a higher position than the refrigerant pipe, the plate is located at a lower position than the refrigerant pipe when the vehicle is stopped at a slope or runs on a slop, so that the liquid refrigerant is kept to be stocked in the plate.

As described above, when the heater attached to the plate is supplied with current to heat the battery under the state that the liquid refrigerant is stocked in the plate, the liquid refrigerant in the plate serves as a thermal load, and the heating efficiency of the battery is lowered.

### SUMMARY OF THE INVENTION

The present invention has been implemented to solve the foregoing problems, and has an object to provide a cooling/heating structure that can be miniaturized and cool/heat a battery efficiently , and a battery module having the cooling/heating structure.

In order to attain the above object, a battery cooling/heating structure (2) having a plate (30) that is brought into contact with a battery (10) to cool and heat the battery, comprises: a medium pipe (33) of plural arrays (33a, 33b, 33c, 33d) that are arranged substantially in parallel on the plate and through which refrigerant medium flows to cool the battery, each of the plural arrays having a straight portion; and a heater (40) that is disposed between the straight portions of the plural arrays of the medium pipe and to which current is supplied to heat the battery through the plate, the medium pipe and the heater being integrally arranged within the same plane of the plate.

The above battery cooling/heating structure further comprises a trap (50) that is disposed at entrance/exit (35a, 38a) of the plate for the refrigerant medium and has a pipe passage (50a, 50b) located at a lower position than the plate.

The above battery cooling/heating structure further comprises heater holding members (41) arranged at equal intervals on the back surface of the plate, wherein each of the medium pipes is disposed between adjacent heater holding members, and the heater is held by each of the heater holding members.

The above battery cooling/heating structure further comprises an in-vehicle mount type air-conditioning refrigeration cycle (60, 70) having an evaporator (64), wherein the plate is connected to the evaporator of the refrigeration cycle in parallel through a pipe.

The above battery cooling/heating structure further comprises a dedicated refrigeration cycle (90) connected to the plate through a pipe, wherein the plate serves as an evaporator for the dedicated refrigeration cycle.

The above battery cooling/heating structure further comprises an opening/closing valve (54, 55) at entrance/exit of the plate for the refrigerant medium.

In the above battery cooling/heating structure, the medium pipe is disposed in a meandering form.

The battery cooling/heating structure further comprises an in-vehicle mount type air-conditioning refrigeration cycle (60, 70) having a heat exchanger provided at a low temperature portion thereof, wherein the plate is connected to the heat exchange (65) through a pipe.

A battery module having an assembled battery constructed by assembling a plurality of electric cells (11), and a case (3) having a side plate and a bottom plate in which the assembled battery is mounted, comprises: a single plate (30) that is disposed in the case so as to be brought into contact with the battery; a medium pipe (33) of plural arrays (33a, 33b, 33c, 33d) that have straight portions and arranged substantially in parallel on the plate; a heater disposed between the straight portions of the medium pipe, the medium pipe and the heater being integrally arranged within the same plane of the plate, whereby refrigerant medium is made to flow through the medium pipe to cool the battery through the plate, and current is supplied to the heater to heat the battery through the plate.

The above battery module further comprises a trap (50) that is disposed at entrance/exit of the plate for the refrigerant medium and has a pipe passage (50a, 50b) located at a lower position than the plate, wherein the plate is disposed in the case so as to be brought into contact with each of the electric cells, and inlet/outlet pipes (51, 52) of the plate for the refrigerant medium are designed to extend upwardly.

In the above battery module, the medium pipe has a plurality of planar pipes (33a, 33b, 33c, 33d), each of the planar pipes has a plurality of medium flow paths (32) through which refrigerant medium flows, one end of each of the planar pipes is connected to an inlet header (35)or outlet header (38) intercommunicating with the trap, and the heater is disposed in the neighborhood of each of the planar pipes.

According to the present invention, in the battery cooling/heating structure that the plate with which the medium pipe and the heater are integrated is brought into contact with the battery, refrigerant medium is made to flow through the medium pipe to cool the battery, current is supplied to the heater to heat the battery, the plural arrays of the medium pipe are arranged substantially in parallel on the plate, the heater is disposed between the adjacent straight portions of the medium pipe, and the medium pipe and the heaters are integrally arranged within the same plane of the plate. Therefore, the plate can be formed to be thin, and the heat of the heaters and the refrigerant pipe can be directly transferred to the heat-exchange face of the plate to cool/heat the plate. Accordingly, the battery cooling/heating structure can be miniaturized and the battery can be cooled/heated efficiently.

### BRIEF DESCRIPTION OF THE DRAWINGS

Fig. 1 is a diagram showing the arrangement construction of a battery module according to a first embodiment of the present invention;
Fig. 2 is a diagram showing the construction of a plate;
Fig. 3 is a bottom diagram showing a plate when the plate is viewed from the lower side;
Fig. 4 is a cross-sectional view of the plate;
Fig. 5 is a diagram showing an example of operation control of a battery cooling/heating structure;
Fig. 6 is a circuit diagram showing the connection construction of a plate according to a second embodiment;
Fig. 7 is a diagram showing the arrangement construction of a battery module according to a third embodiment;
Fig. 8 is a transparent view showing the construction of the battery module;
Fig. 9 is a perspective view showing the construction of a battery cooling/heating structure;
Fig. 10 is a diagram showing the construction of the plate;
Fig. 11 is a diagram showing the arrangement construction of a battery module according to a fourth embodiment;
Fig. 12 is a diagram showing the arrangement construction of a battery module according to a fifth embodiment;
Fig. 13 is a diagram showing the arrangement construction of a battery module according to a sixth embodiment; and
Fig. 14 is a diagram showing the arrangement construction of a battery module according to a seventh embodiment.

### DETAILED DESCRIPTION OF THE PREFERRED EMBODIMENTS

Preferred embodiments according to the present invention will be described hereunder with reference to the accompanying drawings.

### <First Embodiment>

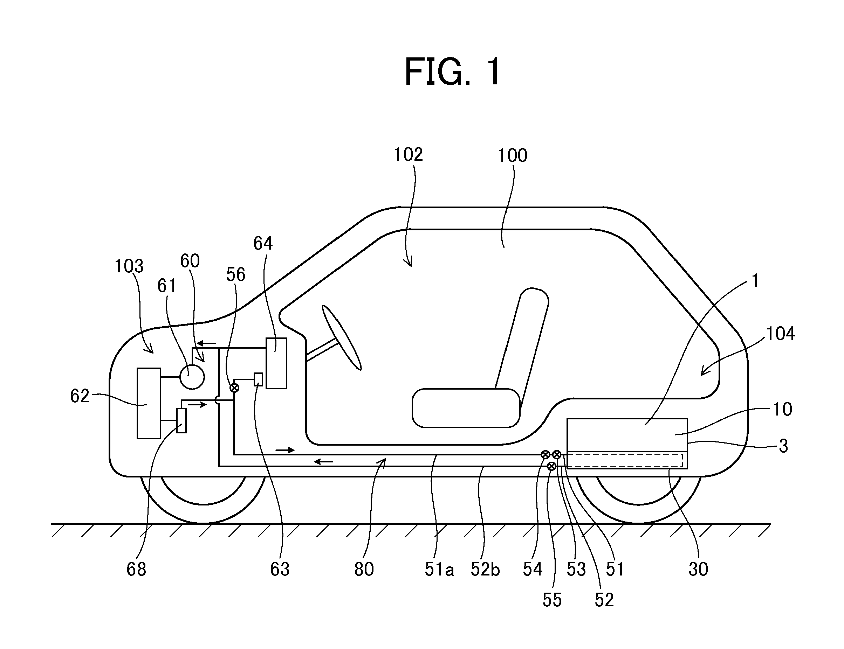

Fig. 1 shows a vehicle 100 such as a hybrid vehicle, an electrical vehicle or the like in which a batterymodule 1 according to an embodiment is mounted. The battery module 1 is generally disposed under a floor at the rear side of a rear seat 101, between the rear seat 101 and a trunk room 104, under a floor of the trunk room 104 or the like in which a mount space is easily provided in the vehicle 100. The battery module 1 has an assembled battery 10 and a plate 30 which is brought into contact with the assembled battery 10 to cool/heat the assembled battery 10, and the assembled battery 10 and the plate 30 are accommodated in a case 3 having a substantially hermetically-sealed structure having a side plate and a bottom plate (not shown). The assembled battery 10 is designed in a substantially rectangular parallelepiped shape by arranging and assembling plural electric cells (not shown).

Amedium inlet pipe 51 and a medium outlet pipe 52 intercommunicate with the plate 30. The medium inlet pipe 51 and the medium outlet pipe 52 intercommunicate with refrigerant pipes 51a and 52a, and the refrigerant pipes 51a and 52a are passed under floor in the vehicle interior 102 so as to extend to an engine room 103 provided at the front side of the vehicle 100, and connected to a refrigeration cycle 60 for in-vehicle air condition (car air conditioner) mounted in the engine room 103 through pipes, thereby forming a cooling cycle 80 of the battery module 1.

The refrigeration cycle 60 is constructed by connecting a compressor 61, a condenser 62 disposed in parallel to a radiator (not shown) of a vehicle 100, a receiver tank 68, a first pressure-reducing device 63 and an evaporator through a refrigeration pipe 60a. A refrigerant pipe 51a is connected between the receiver tank 68 and the first pressure-reducing device 63. A refrigerant pipe 52a is connected between the evaporator 64 and the compressor 61. The refrigerant pipe 51a is connected to a medium inlet pipe 51 through a first opening/closing valve 54, and the refrigerant pipe 52a is connected to a medium outlet pipe 52 through a second opening/closing valve 55. Accordingly, a second pressure-reducing device 53 and a plate 30 are connected to the refrigeration cycle 60 in parallel to the first pressure-reducing device 63 and the evaporator 64. Furthermore, a third opening/closing valve 56 is connected between the first pressure-reducing device 63 and the connection portion between the refrigerant pipe 51a and the refrigerant pipe 60a.

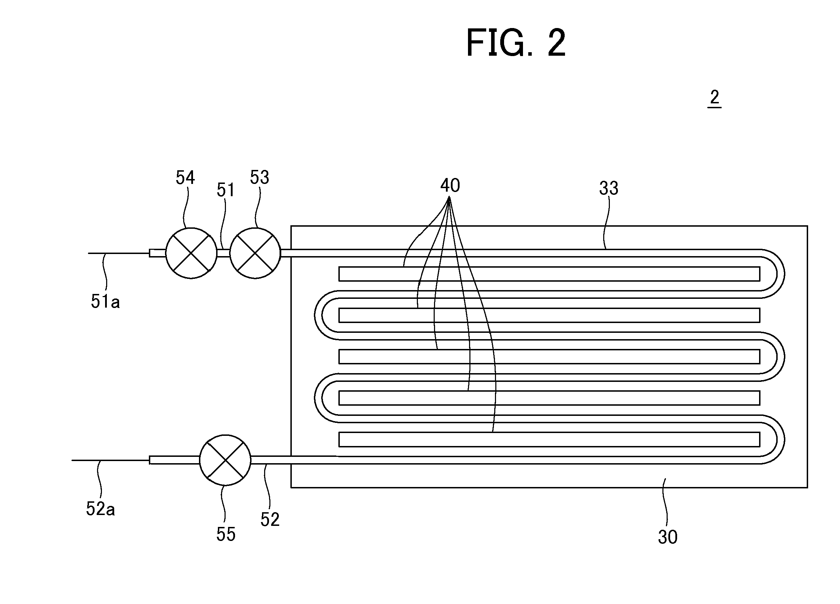

Fig. 2 shows a battery cooling/heating structure 2 according to the embodiment. The battery cooling/heating structure 2 comprises the plate 30, the medium inlet pipe 51 and the medium outlet pipe 52 connected to the plate 30, and the refrigerant pipe 51a and the refrigerant pipe 52a which are connected to the medium inlet pipe 51 and the medium outlet pipe 52 through the first opening/closing valve 54 and the second opening/closing valve 55 respectively. The second pressure-reducing device 53 is provided to the medium inlet pipe 51.

The plate 30 is provided with a medium pipe 33 which intercommunicates with the medium inlet pipe 51 and the medium outlet pipe 52 and is disposed in a meandering shape along the longitudinal direction of the plate 30, and plural heaters 40 each of which is disposed between the adj acent straight line portions of the meandering medium pipe 33.

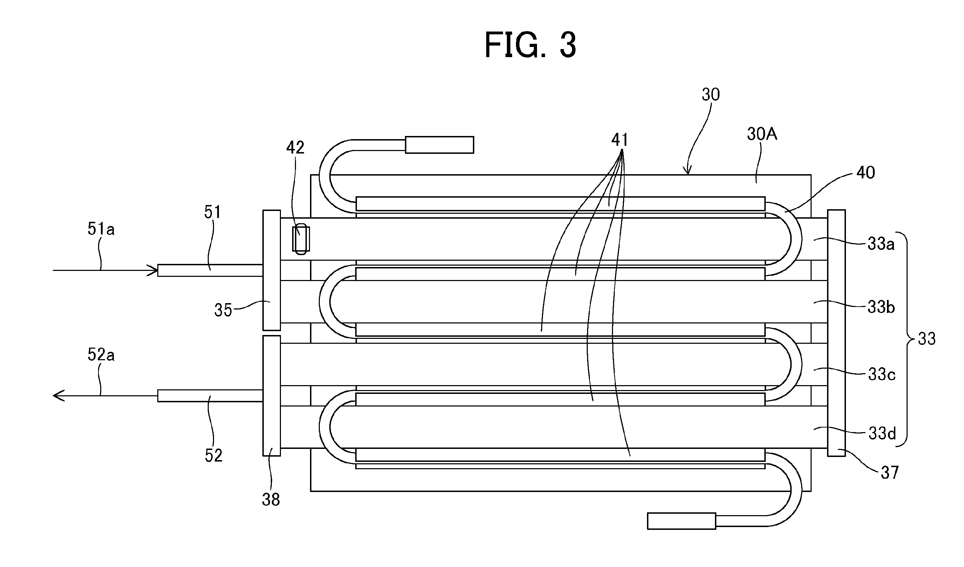

As shown in Fig. 3, the plate 30 has a heat transfer member 30A which has excellent thermal conductivity and formed of a thin aluminum plate member or the like, and the heaters 40 and the medium pipe 33 which are arranged on the same surface side of the heat transfer member 30A which corresponds to the back surface of the plate 30.

The heaters 40 are arranged at an equal interval in parallel in the longitudinal direction on the heat transfer member 30A and held by plural heater holding members 41 described later. According to this construction, the heater holding members 41 are arranged along the longitudinal direction of the heat transfer member 41, and thus the heater holding members 41 serve as reinforcing members of the heat transfer member 30A, so that the plate 30 can be prevented from being deformed. Furthermore, the heater 40 may be constructed by bending a pipe-shaped heater having flexibility in a meandering form and arranging the heater along the heat transfer member 30A.

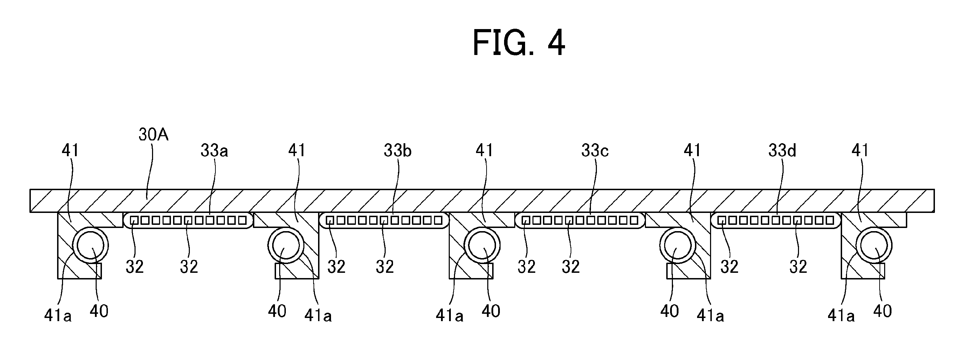

The medium pipe 33 has plural planar pipes 33a, 33b, 33c and 33d arranged in parallel in the longitudinal direction of the heat transfer member 30A, and the respective planar pipes 33a, 33b, 33c and 33d are brought into contact with the heat transfer member 30A and arranged between the respective heater holding members 41. Each of the planar pipes 33a, 33b, 33c and 33d is a flat porous (microchannel) type pipe (heat exchanger) having plural thin (small-diameter) flow paths (medium flow paths) 32 (Fig. 4) which are arranged in parallel in the longitudinal direction of the plate 30 and through which refrigerant flows. According to this construction, the heat transfer area of the medium pipe 33 can be enlarged, and thus the heat-exchange efficiency is increased, so that the plate 30 can be efficiently cooled even when the plate 30 is miniaturized.

One end of each of the planar pipes 33a, 33b is connected to a inlet header 35, and the other end is connected to an intermediate header 37. Furthermore, one end of each of the planar pipes 33c and 33d is connected to an outlet header 38, and the other end is connected to the intermediate header 37 as in the case of the planar pipes 33a and 33b. According to this construction, plural planar pipes 33a to 33d are joined to one another through plural headers 35, 37 and 38, whereby the integrally formed medium pipe 33 can be formed.

Furthermore, the inlet header 35, the outlet header 38 and the intermediate header 37 are formed in a substantially cylindrical shape having a hollow structure. The medium inlet pipe 51 is connected to the substantially center portion of the inlet header 35, and the medium outlet pipe 52 is connected to the substantially center portion of the outlet header 38. Furthermore, at the outside of the planar pipe 33a, a plate temperature sensor 42 for detecting the temperature of the plate 30 is provided at the refrigerant inlet side.

As shown in Fig. 4, each of the heater holding members 41 is formed to be substantially U-shaped in section, and has an opening portion 41a. The opening portion 41a is formed in an arcuate shape having substantially the same dimension as the outer periphery of the heater 40. The outer periphery of the heater 40 comes into contact with the opening portion 41a so that the heater 40 is grasped. The heater holding member 41 is formed of a member having high thermal conductivity, and one surface thereof is brought into contact with the heat transfer member 30A and fixed to the heat transfer member 30Aby welding or the like. According to this construction, the thermal resistance among the heater 40, the heater holding member 41 and the heat transfer member 30A can be reduced, and the heat of the heater 40 can be efficiently transferred to the heat transfer member 30A through the heater holding member 41 to heat the plate 30.

Next, the operation of this embodiment will be described.

As shown in Fig. 1, when the cooling cycle 80 is operated, it assumes the operation of the refrigeration cycle. The refrigeration cycle 60 operates under cooling operation in the vehicle interior 102, and the cooling cycle 80 operates when the temperature of the assembled battery 10 increases to a predetermined temperature or more.

Under cooling operation in the vehicle interior 102, the first opening/closing valve 54 and the second opening/closing valve 55 are closed, and the third opening/closing valve 56 is opened, whereby the refrigeration cycle 60 performs cooling operation. Refrigerant circulated in the refrigeration cycle 60 is compressed in the compressor 61, and becomes gas refrigerant of high temperature and high pressure. The gas refrigerant is condensed in the condenser 62 and becomes liquid refrigerant of low temperature and high pressure. The liquid refrigerant flows to the first pressure-reducing device 63 through the receiver tank 68 and becomes liquid refrigerant of low temperature and low pressure in the first pressure-reducing device 63. This liquid refrigerant absorbs heat of the vehicle interior 102 in the evaporator 64 to be evaporated, and then sucked into the compressor 61 again.

When it is required to cool the plate 30 under cooling operation, the first opening/closing valve 54, the second opening/closing valve 55 and the third opening/closing valve 56 are opened, and a part of refrigerant circulated in the refrigeration cycle 60 is circulated in the cooling cycle 80 of the battery module 1 to cool the plate 30. Specifically, the refrigerant is passed through the condenser 62 while cooled, and becomes liquid refrigerant of low temperature and high pressure. This liquid refrigerant flows into the refrigerant pipe 51a, passes through the first opening/closing valve 54 to the medium inlet pipe 51 and the second pressure-reducing device 53 to be reduced in pressure, and then flows into the plate 30. The refrigerant further flows through the plate 30 while cooling the plate 30, whereby the refrigerant is evaporated. The evaporated refrigerant flows from the medium outlet pipe 52 to the outside of the plate 30, and passes through the second opening/closing valve 55 to the refrigerant pipe 52a. this refrigerant and the refrigerant circulated in the refrigeration cycle 60 join together at the downstream side of the evaporator 64, and then is sucked into the compressor 61.

When it is required to cool the plate 30 at the stop time of cooling operation, the first opening/closing valve 54 and the second opening/closing valve 55 are opened, and the third opening/closing valve 56 is closed. When the compressor 61 of the refrigeration cycle 60 is driven, the refrigerant is circulated into the cooling cycle 80 through the condenser 62 and the receiver tank 68 to cool the plate 30. The third opening/closing valve 56 is closed, and thus the refrigerant bypasses the first pressure-reducing device 63 and the evaporator 64.

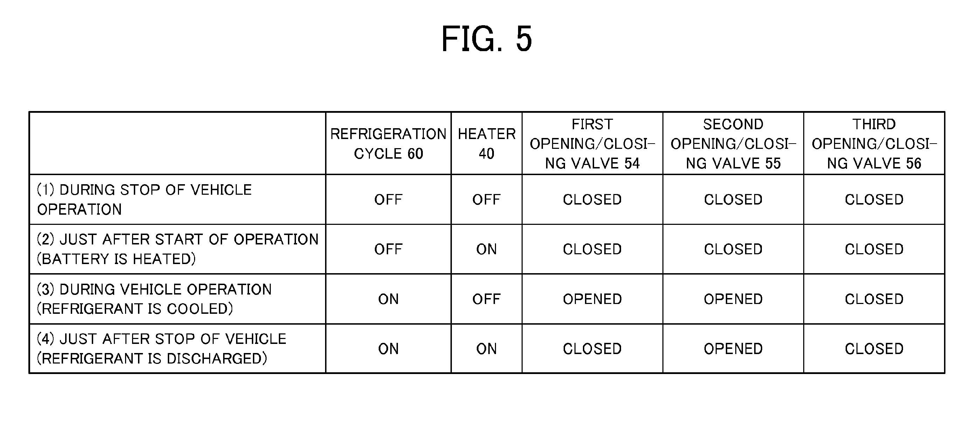

Fig. 5 shows an example of the operation control of the battery cooling/heating structure 2 when the outdoor air temperature is low under winter season or the like. The operation of heating the plate 30 assumes the operation of the in-vehicle air-conditioning refrigeration cycle 60 and supply of current to the heater 40.

When the operation of the vehicle 100 is stopped (1) , the operation of the compressor 61 of the in-vehicle air-conditioning refrigeration cycle 60 and the current supply to the heater 40 are stopped. Furthermore, the first opening/closing valve 54, the second opening/closing valve 55 and the third opening/closing valve 56 are closed, and the circulation of the refrigerant medium in the refrigeration cycle 60 and the cooling cycle is stopped.

When the temperature of the assembled battery 10 is not more than a predetermined temperature immediately after the operation of the vehicle 100 is started (2), the current supply to the heater 40 is started, and the plate 30 is heated. At this time, the operation of the compressor 61 of the refrigeration cycle 60 is stopped, and thus the first opening/closing valve 54 and the third opening/closing valve 56 are closed, so that the circulation of the refrigerant medium is stopped.

When the temperature of the assembled battery 10 reaches to the predetermined temperature or more during the operation of the vehicle 100 (3) , the operation of the compressor 61 of the refrigeration cycle 60 is started, and the first opening/closing valve 54 and the second opening/closing valve 55 are opened, whereby the circulation of the refrigerant to the cooling cycle 80 is executed to cool the plate 30. At the same time, the third opening/closing valve 56 is closed, and the refrigerant bypasses the first pressure-reducing device 63 and the evaporator 64. The current supply to the heater 40 is stopped.

When the operation of the vehicle 100 is stopped and at the same time the compressor 61 of the refrigeration cycle 60 is stopped under the state that the refrigerant remains in the plate 30, the refrigerant medium is left in the plate 30. The refrigerant medium remaining in the plate 30 is evaporated by heat of the assembled battery 10, and temporarily discharged to the outside of the plate 30. However, the discharged refrigerant is cooled and condensed by the outdoor air of low temperature in the refrigerant pipes 51a and 52a intercommunicating with the plate 30, and returns into the plate 30 again, so that the cooled refrigerant medium is pooled in the plate 30. When the plate 30 is heated by the heater 40 immediately after the operation of the vehicle is started under the above state, the cooled refrigerant medium pooled in the plate 30 serves a thermal load, and thus the heating efficiency of the plate 30 is reduced.

Therefore, immediately after the operation of the vehicle 100 is stopped (4), a refrigerant discharging operation of the plate 30 is executed. When the refrigerant discharging operation is executed, the first opening/closing valve 54 is closed under the state that the operation of the compressor 61 of the refrigeration cycle 60 is continued, and thus flow-in of the refrigerant from the refrigeration cycle 60 into the cooling cycle is stopped. At the same time, the current supply to the heater 40 is started, and thus the refrigerant medium remaining in the medium pipe 33 of the plate 30 is evaporated. Accordingly, the refrigerant medium in the plate 30 is discharged through the opened second opening/closing valve 55 to the outside of the plate 30, and then sucked into the compressor 61.

The refrigerant discharging operation of the plate 30 is stopped when the plate temperature sensor 42 provided to the medium pipe 33 detects that the temperature of the plate 30 increases to the predetermined temperature or more or when the continuing time (continuance) of the refrigerant discharging operation of the plate 30 reaches a set time, the operation of the compressor 61 of the refrigeration cycle 60 and the current supply to the heater 40 are stopped, and the first opening/closing valve 54, the second opening/closing valve 55 and the third opening/closing valve 56 are closed.

The refrigeration discharging operation of the plate 30 is executed immediately after the operation of the vehicle is stopped subsequently to the heating operation of the plate 30 when the outdoor air temperature is low under winter season or the like, but it may be also executed likewise when the outdoor air temperature is high under summer season or the like. Or, when the outdoor air temperature is high under summer season and thus vapor refrigerant discharged from the plate 30 is not re-condensed, the first opening/closing valve 54 and the second opening/closing valve 55 may be kept opened even after the operation of the vehicle 100 is stopped, so that the pressure in the medium pipe 33 is prevented from increasing to a high pressure by the vaporized refrigerant medium in the plate 30.

According to this construction, the mediumpipe 33 and the heater 40 are arranged on the same plane (surface) of the plate 30 to cool/heat the plate 30, and the assembled battery 10 is brought into contact with the other surface of the plate 30 to cool/heat the assembled battery 10. Therefore, the battery cooling/heating structure 2 can be miniaturized. Furthermore, heat can be directly transferred from the heater 40 to the plate 30 while the refrigerant flow path in the medium pipe 33 does not reduce the heat transfer efficiency when the plate 30 is heated, and thus the heating efficiency can be enhanced.

Furthermore, the battery cooling/heating structure 2 is mounted on one plate 30, and the contact surface with the assembled battery 10 can be shared between cooling and heating. Therefore, fabrication workability of the battery module 1 can be enhanced.

Furthermore, the refrigerant discharging operation of the plate 30 is executed just after the operation of the vehicle 100 is stopped, and the first opening/closing valve 54 and the second opening/closing valve 55 are closed after the refrigerant discharging operation, whereby the refrigerant medium is prevented from flowing into the plate 30. Therefore, liquid refrigerant is prevented frombeingpooled in the medium pipe of the plate 30 and thus prevented from serving as a thermal load under heating of the plate 30, so that the heating efficiency of the plate 30 can be enhanced.

The first opening/closing valve 54 is provided to the medium inlet pipe 51 of the plate 30, and the second opening/closing valve 55 is provided O the medium outlet pipe 52. Therefore, as compared with a case where the first opening/closing valve 54 and the second opening/closing valve 55 are provided at the connection side to the refrigeration cycle 60, the amount of the refrigerant medium between the first opening/closing valve 54 and the second opening/closing valve 55 can be reduced, and thus the refrigerant medium can be efficiently discharged when the refrigerant of the plate 30 is discharged.

### <Second Embodiment>

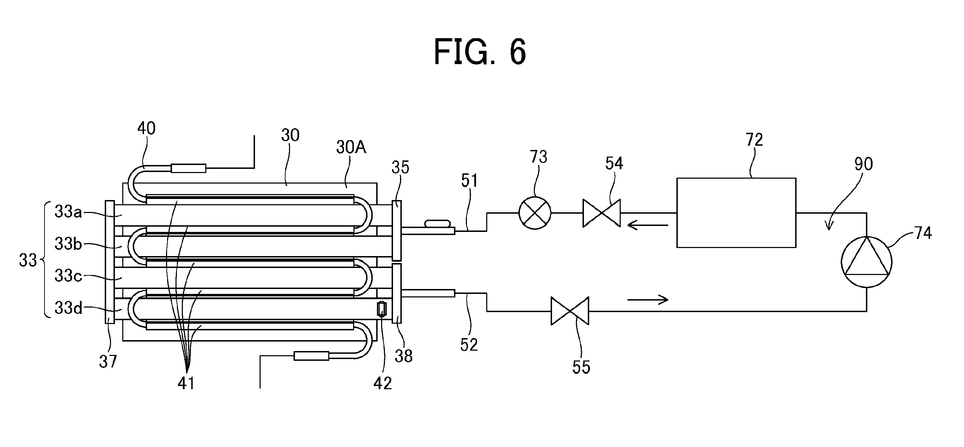

Fig. 6 is a circuit diagram showing the cooling cycle of the plate 30 according to a second embodiment. In the following description, the same elements as described with respect to the first embodiment are represented by the same reference numerals, and the description thereof is omitted.

A refrigeration cycle of this embodiment is not an in-vehicle air-conditioning refrigeration cycle, but a refrigeration cycle 90 which is exclusively provided to the battery cooling/heating structure 2. The refrigeration cycle 90 may be installed to be adjacent to the battery module 1. Therefore, the pipe can be shortened, the routing workability of the refrigerant pipe can be enhanced. In addition, the thermal loss in the pipe can be reduced, and the cooling efficiency of the battery cooling/heating structure 2 can be enhanced.

The refrigeration cycle 90 has a compressor 74, a condenser 72 and a pressure-reducing device 73 which are connected to the plate 30 through a pipe. The pressure-reducing device 73 is connected to the plate 30 through the medium inlet pipe 51, and the plate 30 is connected to the compressor 74 through the medium outlet pipe 52. A first opening/closing valve 54 is provided between the condenser 72 and the pressure-reducing device 73, and a second opening/closing valve 55 is provided between the plate 30 and the compressor 74. The plate 30 serves as an evaporator in the refrigerant cycle 90, and the low-temperature refrigerant medium is made to flow into the medium pipe 33 of the plate 30 to cool the plate 30.

Next, the operation of this embodiment will be described.

The refrigeration cycle 90 operates to cool the plate 30 when the temperature of the assembled battery 10 increases to a predetermined temperature or more. When the plate 30 is cooled, the first opening/closing valve 54 and the second opening/closing valve 55 are opened, and the operation of the refrigeration cycle 90 is started. The refrigerant circulated in the refrigeration cycle 90 is compressed in a compressor 74 and becomes gas refrigerant of high temperature and high pressure. The gas refrigerant is then condensed in a condenser 72 and becomes refrigerant of low temperature and high pressure. The liquid refrigerant is reduced in pressure in the pressure-reducing device 73 to become liquid refrigerant of low temperature and low pressure, and this liquid refrigerant absorbs heat of the assembled battery 10 in the plate 30 to be evaporated and then sucked into the compressor 74 again.

When the temperature of the assembled battery 10 is not more than the predetermined temperature, current supply to the heater 40 is started to heat the plate 30. When the plate 30 is heated, the operation of the refrigeration cycle 90 (compressor 74) is stopped, and the first opening/closing valve 54 and the second opening/closing valve 55 are closed so that no refrigerant medium is circulated in the plate 20.

Immediately after the operation of the vehicle 100 is stopped, the refrigerant discharging operation of the plate 30 is executed. The refrigerant discharging operation is stopped when the plate temperature sensor 42 provided to the medium pipe 33 detects that the temperature of the plate 30 increases to a predetermined temperature or more, or when the refrigerant discharging operation of the plate 30 reaches a set time. In the refrigerant discharging operation, the first opening/closing valve 54 is closed, and the second opening/closing valve 55 is opened. The refrigeration cycle 90 is operated, and at the same time the current supply to the heater 40 is started. Accordingly, the flow-in of the refrigerant medium into the plate 30 is stopped, the refrigerant medium remaining in the medium pipe 33 of the plate 30 is vaporized, and the refrigerant medium in the plate 30 is discharged to the outside through the second opening/closing valve 55 and sucked into the compressor 74. When the operation of the refrigerant discharging operation is stopped, the operation of the refrigeration cycle 90 and the current supply to the heater 40 are stopped, and the first opening/closing valve 54 and the second opening/closing valve 55 are stopped.

According to this construction, the plate 30 can be cooled not by using the in-vehicle mount type air-conditioning refrigeration cycle 60, but by using the dedicated refrigeration cycle 90. Therefore, when it is not required to operate the in-vehicle mount type air-conditioning refrigeration cycle 90 under the outside air temperature, the in-vehicle mount type air-conditioning high-output compressor 61 is not required to be driven to cool the battery module 1. Furthermore, when the battery module 1 is cooled, the low-output compressor 74 of the dedicated refrigeration cycle 90 can be driven to cool the plate 30. Therefore as compared with the case where the compressor 61 of the in-vehicle mount type air-conditioning refrigeration cycle 60 is driven to cool the plate 30, the total energy efficiency of the vehicle 100 can be enhanced. Furthermore, under cooling operation, the plate 30 can be cooled without imposing any load on the refrigeration cycle 60, and thus the air-conditioning efficiency of the vehicle interior 102 is not reduced.

Furthermore, the refrigerant discharging operation of the plate 30 is executed just after the operation of the vehicle 100 is stopped, and thus liquid refrigerant serving as a thermal load is not pooled in the medium pipe 33 of the plate 30. Furthermore, when the assembled battery 10 is required to be heated at the start time of the operation of the vehicle 100, the plate 30 can be efficiently heated.

As described above, according to this embodiment, in the battery cooling/heating structure 2 in which the plate 30 integrated with the medium pipe 33 and the heater 40 is brought into contact with the assembled battery 10, refrigerant medium is made to flow through the medium pipe 33 to cool the assembled battery 10 and current is supplied to the heater 40 to heat the assembled battery 10, plural lines of medium pipes 33 are arranged on the plate 30, the heater 40 is arranged between the straight portions of the medium pipes 33, and these elements are integrally arranged within the same plane. Therefore, the cooling/heating of the assembled battery 10 can be performed by sharing the same plane of the plate 30, and thus the battery cooling/heating structure 2 can be miniaturized.

Furthermore, the heat of the heater 40 is directly transmitted to the plate 30 through no medium pipe 33, and thus the heat transfer efficiency is not reduced by the refrigerant flow path in the medium pipe 33 when the plate 30 is heated. Furthermore, the battery cooling/heating structure 2 is disposed on one plate 30, and the contact surface thereof with the assembled battery 10 is shared for cooling and heating, and thus the fabrication workability of the battery module 1 can be enhanced.

According to this embodiment, the heater holding members 41 are arranged at equal intervals along the longitudinal direction of the plate 30 on the back surface of the plate 30, the medium pipe 33 (planar pipes 33a, 33b, 33c, 33d) are arranged between the heater holding members 41, the heater 40 is held by each heater holding member 41, and the heater 40 is arranged by bending a pipe-shaped heater having flexibility in a meandering shape, for example. Therefore, the medium pipe 33 (the planar pipes 33a, 33b, 33c, 33d) and the heater 40 can be uniformly arranged on the back surface of the plate 30. Therefore, when the plate 30 is cooled and heated, the heat can be uniformly transferred to the plate 30 evenly, and the cooling/heating efficiency of the plate 30 can be enhanced.

Furthermore, the heater holding members 41 are arranged at equal intervals along the longitudinal direction of the plate 30. Therefore, the heater holding members s41 serve as reinforcing members of the plate 30, and can prevent deformation of the plate 30. Furthermore, the heater 40 is formed by bending one pipe-shaped heater having flexibility in a meandering shape, for example, and the heater 40 is held by the heater holding members 41 arranged on the plate 30. Therefore, the workability of fixing the heater 40 to the plate 30 or dismantling (recycling) the heater 40 can be enhanced.

Furthermore, according to this embodiment, the second pressure-reducing device 53 and the plate 30 are connected through pipes in parallel to the first pressure-reducing device 63 and the evaporator 64 of the in-vehicle mount type air-conditioning refrigeration cycle 60, and thus a part of the refrigerant medium circulating in the refrigeration cycle 60 can be distributed and made to directly flow into the medium pipe 33 of the plate 30. Therefore, the plate 30 can be quickly cooled and thus the assembled battery 10 can be cooled by a simple construction that the plate 30 is connected to the in-vehicle mount type air-conditioning refrigeration cycle 60 in parallel.

Still furthermore, according to this embodiment, the battery cooling/heating structure 2 is not provided with the in-vehicle mount type air-conditioning refrigeration cycle 60, but provided with the refrigeration cycle 90 which is exclusively provided to the battery cooling/heating structure 2, and the plate 30 is pipe-connected in place of the evaporator of the refrigeration cycle. Therefore, the battery cooling/heating structure 2 can cool the plate 30 without assuming the operation of the in-vehicle mount type air-conditioning refrigeration cycle 60. The compressor 74 of the refrigeration cycle 90 is provided to compress only the refrigerant flowing through the plate 30, and thus the output power of this compressor 74 is lower than the compressor 61 provided to the in-vehicle mount type air-conditioning refrigeration cycle 60, and thus this compressor needs less power for driving. Therefore, the energy efficiency of the cooling operation of the plate 30 can be enhanced. Furthermore, when the outdoor air temperature is high, the plate 30 can be cooled without imposing any load on the refrigeration cycle 60, and the cooling efficiency of the vehicle 100 is not reduced.

Furthermore, the refrigeration cycle 90 and the battery module 1 can be provided to be adjacent to each other. Therefore, the pipe for connecting them can be shortened, and the working efficiency of routing the refrigerant pipe can be enhanced, and the thermal loss of the pipe can be reduced, so that the cooling efficiency of the battery cooling/heating structure 2 can be enhanced.

Furthermore, according to this embodiment, the first opening/closing valve 54 is provided to the medium inlet pipe 51 of the plate 30, and the second opening/closing valve 55 is provided to the medium outlet pipe 52. Therefore, the distance between the first opening/closing valve 54 and the second opening/closing valve is shorter, and thus the amount of refrigerant medium remaining between the first opening/closing valve 54 and the second opening/closing valve 55 when the operation of the vehicle 100 is stopped is smaller. Therefore, the refrigerant medium can be efficiently discharged when the refrigerant discharging operation of the plate 30 is executed, and thus no liquid refrigerant serving as the thermal load is pooled in the mediumpipe 33. Therefore, when the temperature of the assembled battery 10 is low at the start time of the operation of the vehicle 100, the pool 30 can be efficiently heated.

According to this embodiment, the medium pipe 33 is constructed by integrally forming pipes of plural arrays and arranging the pipes on the plate 30 in a meandering (or striped) form, and thus the work of fixing the medium pipe 33 to the plate 30 can be facilitated. Furthermore, by forming the medium pipe 33 in a meandering form, the strength of the medium pipe 33 to the force applied from the plate 30 to the medium pipe 33 can be enhanced, so that the medium pipe 33 can also serve to reinforce the plate 30 and the deformation of the plate 30 can be prevented.

Furthermore, according to this embodiment, in the battery module 1 in which the plural electric cells are assembled to form the assembled battery 10 and the assembled battery 10 is accommodated in the case having the side plate and the bottom plate, the single plate 3 is disposed in the case 3 so as to come into contact with the assembled battery 10, the plural arrays of the medium pipe 33 are arranged on the plate 30 substantially in parallel to one another, and the heater 40 is disposed between the straight portions of the medium pipe 33. These elements are integrally arranged within the same plane of the plate 30, refrigerant medium is made to flow through the medium pipe 33 to cool the assembled battery 10, and current is supplied to the heater 40 to heat the assembled battery 10. Therefore, the contact face between the assembled battery 10 and the plate 30 can be shared to both cooling and heating, and thus the battery cooling/heating structure 2 can be miniaturized. Furthermore, the assembled battery 10 and the plate 30 for cooling/heating the assembled battery 10 can be accommodated in the single case, so that the installation of the battery module 1 can be enhanced.

### <Third Embodiment>

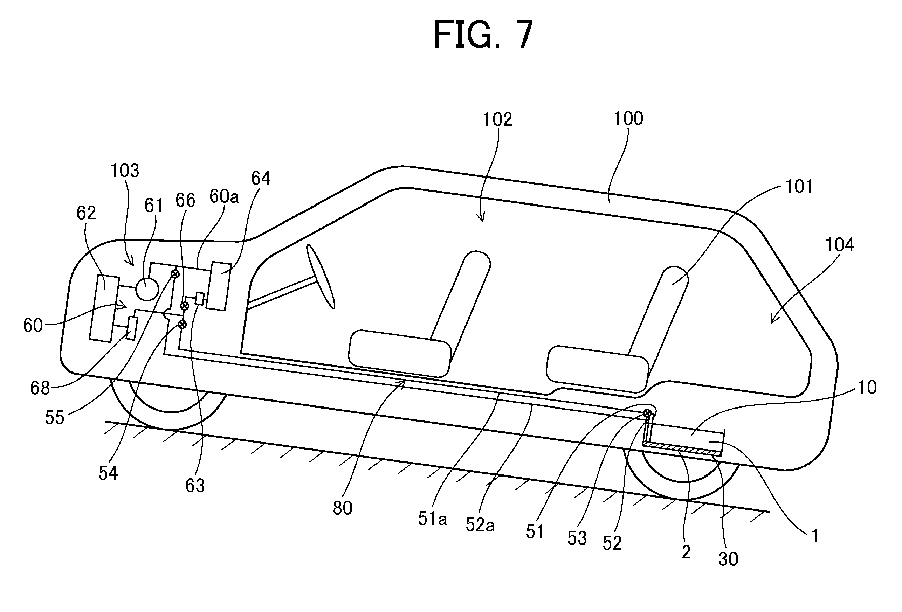

Fig. 7 shows a vehicle 100 such as a hybrid vehicle, an electric vehicle or the like which stops on an ascending slope. In the following description, the same elements as described with reference to the first or second embodiment are represented by the same reference numerals, and the description thereof is omitted.

The battery module 1 has an assembled battery 10, a plate 30 described later which is brought into contact with the assembled battery 10 to cool/heat the assembled battery 10, and a battery cooling/heating structure 2 which is formed integrally with the plate 30. A refrigerant pipe 51a is connected between a receiver tank 68 and a first pressure-reducing device 63 through a first opening/closing valve 54. Furthermore, the refrigerant pipe 52a is connected between the evaporator 64 and the compressor 61 through the second opening/closing valve 55. The refrigerant pipe 51a is connected to the medium inlet pipe 51 through the second pressure-reducing device 53, and the medium inlet pipe 51 intercommunicates with the plate 30.

Next, the operation of this embodiment will be described.

When the cooling cycle 80 is operated, this operation assumes the operation of the refrigeration cycle. The refrigeration cycle 60 operates under cooling operation in the vehicle interior 102, and the cooling cycle 80 operates when the temperature of the assembled battery 10 described later provided to the battery module 1 increases to a predetermined temperature or more.

Under cooling operation in the vehicle interior 102, the first opening/closing valve 54 and the second opening/closing valve 55 are closed, and the refrigeration cycle 60 executes cooling operation. Refrigerant circulated in the refrigeration cycle 60 is compressed in the compressor 61 to become gas refrigerant of high temperature and high pressure, and then compressed in the compressor 61 to become liquid refrigerant of low temperature and high pressure. This liquid refrigerant is passed through the receiver tank 69 and reduced in pressure in the pressure-reducing device 63 to become liquid refrigerant of low temperature and low pressure. Then, the liquid refrigerant is passed through the evaporator 64 while absorbing heat of the vehicle interior 102 to be evaporated, and then sucked into the compressor 61 again.

When it is required to cool the plate 30 under cooling operation, the first opening/closing valve 54, the second opening/closing valve 55 and the third opening/closing valve 56 are opened, and a part of the refrigerant circulated in the refrigeration cycle 60 is circulated into the cooling cycle 80 of the battery module 1 to cool the plate 30. Specifically, refrigerant which is passed through the condenser 62 to be cooled and becomes liquid refrigerant of low temperature and high pressure is introduced into the refrigerant pipe 51a through the first opening/closing valve 54, passed through the refrigerant pipe 51a, reduced in pressure in the second pressure-reducing device 53, and then flows from the medium inlet pipe 51 into the plate 30. The refrigerant concerned flows through the plate 30 to be evaporated while cooling the plate 30, and the evaporated refrigerant flows from the medium outlet pipe 52 to the outside of the plate 30, and passes through the refrigerant pipe 52a. The refrigerant concerned and refrigerant circulated in the refrigeration cycle 60 join together at the downstream side of the evaporator 64, and are sucked into the compressor 61.

When it is required to cool the plate 30 at the stop time of the cooling operation, the first opening/closing valve 54 and the second opening/closing valve 55 are opened, and the third opening/closing valve 56 are closed. When the compressor 61 of the refrigeration cycle 60 is driven, the refrigerant is circulated through the condenser 62 and the receiver tank 68 into the cooling cycle 80 to cool the plate 30. Since the third opening/closing valve 56 is closed, the refrigerant bypasses the first pressure-reducing device 63 and the evaporator 64.

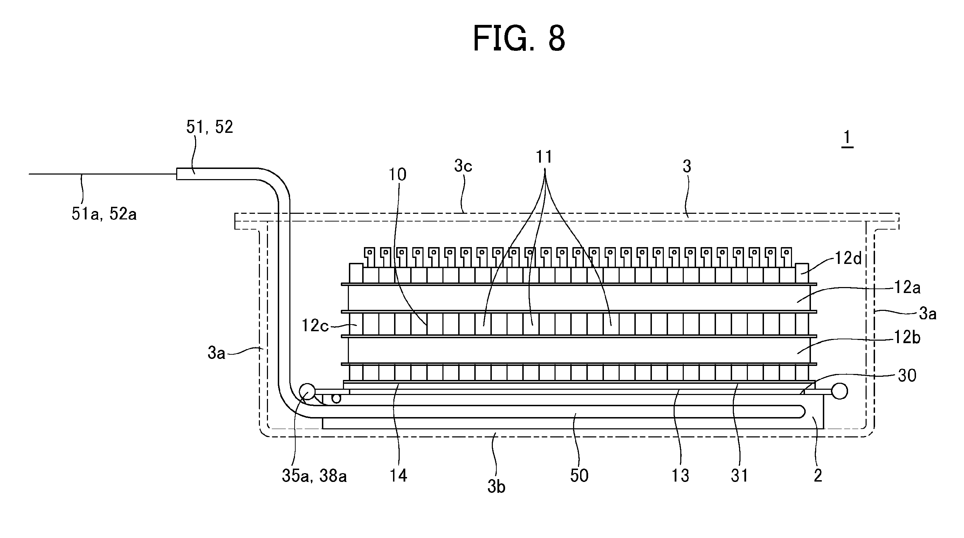

As shown in Fig. 8, the battery module 1 has a case 3 of a substantially hermetically-sealed structure having a side plate 3a, a bottom plate 3b and a lid 3c, an assembled battery (battery) 10 mounted in the case 3, and a battery cooling/heating structure 2 for cooling/heating the assembled battery 10. The battery module 1 may be configured so that plural assembled batteries 10 are arranged side by side or stacked in the case 3.

The assembled battery 10 is constructed in a substantially rectangular parallelepiped shape by arranging and assembling plural square (polygonal) flat-plate type electric cells 11 in the short-side width direction of the electric cells 11. Separators having insulating property (not shown) are sandwiched between the respective adjacent electric cells 11. Each of the electric cells 11 is constructed by accommodating a nonaqueous electrolytic secondary cell containing an electric power generating element around which a positive electrode and a negative electrode are wound through a separator in a square (or polygonal) flat plate type case 10 formed of aluminum or aluminum alloy. A lithium ion secondary cell or the like is suitably used as the nonaqueous electrolytic secondary cell, for example.

Furthermore, the assembled battery 10 is bound by fixing frames 12a and 12b provided at the right and left sides with respect to the arrangement direction of the electric cells 11 and end plates 12c and 12d provided at the front and rear sides with respect to the arrangement direction of the electric cells 11.

The battery cooling/heating structure 2 has a plate 30, an medium inlet pipe 51 and a medium outlet pipe 52 for making medium flow through the plate 30, and a trap 50 having a pipe passage which intercommunicates with pipe connection portions (entrance/exit ports for medium) 35a and 38a of the plate 30 and medium outlet/inlet pipes 51 and 52 and is provided at the lower side of the plate 30. The plate 30 is formed like a thin plate, and the plate face 31 of the plate 30 serves as a heat-exchange face.

The plate face 31 is formed to be larger than the bottom surface 13 of the assembled battery 10, and the bottom surface 13 of the assembled battery 10 is brought into contact with the plate face 31 as the heat-exchange face. Furthermore, the bottom surface of the electric cell 11 constituting the assembled battery 10 is brought into contact with the plate face 31 of the plate 30 through a thermal conductive sheet 14 having excellent thermal conductivity and insulating property on the whole surface thereof. In the battery module 1 in which the plural assembled batteries 10 are arranged on the heat-exchange face of the plate 30, the plate face 31 is formed to have such a size that the bottom surfaces 13 of all the assembled batteries 10 arranged on the plate face 31 can be brought into contact with the plate face 31.

The medium inlet/outlet pipes 51 and 52 pass over the front side with respect to the arrangement direction of the assembled batteries 10, extend substantially vertically from the bottom plate 3b side of the case 3 to the lid 3c, further extends from the lid 3c to the upper side of the case 3 and are connected to the refrigerant pipes 51a and 52a at the outside of the case 3. Furthermore, the medium inlet/outlet pipes 51, 52 are arranged at both the edge sides of the plate 30 extending in the front-and-rear direction with respect to the arrangement direction of the assembled batteries 10 (see Fig. 8) .

Accordingly, the refrigerant medium flowing from the medium inlet pipe 51 into the battery module 1 passes through the trunk, and enters from the pipe connection portion 35a into the plate 30. The refrigerant medium passing through the plate 30 flows out from the pipe connection portion 38a, passes through the trunk 50 again, and then flows out from the medium outlet pipe 52 to the outside of the battery module 1.

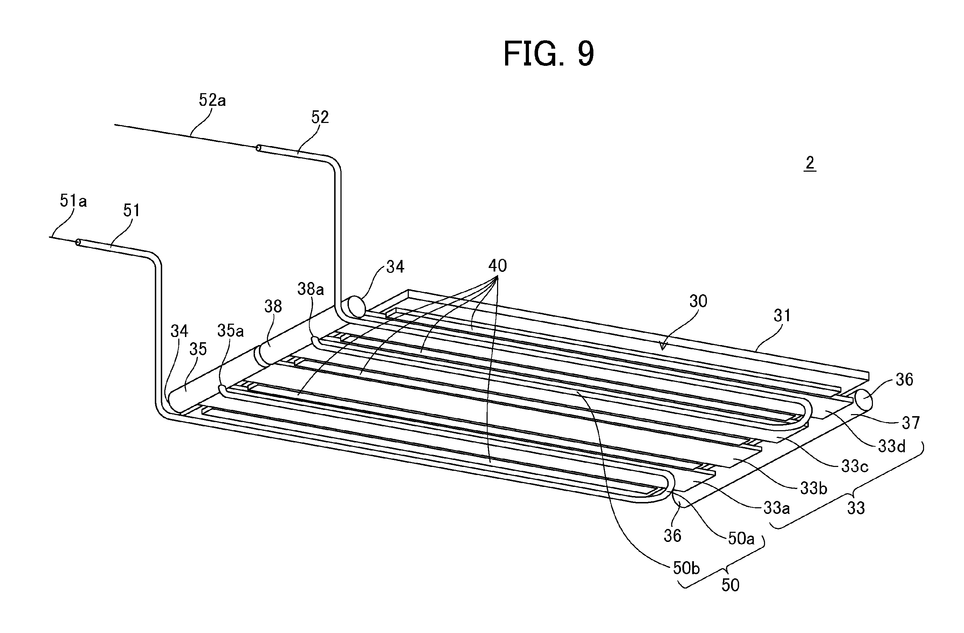

Fig. 9 shows the pipe construction in the plate 30 and the positional relationship of the trap 50 having pipe passages provided at the lower portion of the plate 30. As shown in Fig. 9, the battery cooling/heating structure 2 comprises the plate 30, the trap 50 having the pipe passages 50a and 50b provided at the lower portion of the plate 30, and a medium inlet pipe 51 and a medium outlet pipe 52 which intercommunicate with the pipe passages 50a and 50b of the trap 50 and making refrigerant flow through the plate 30.

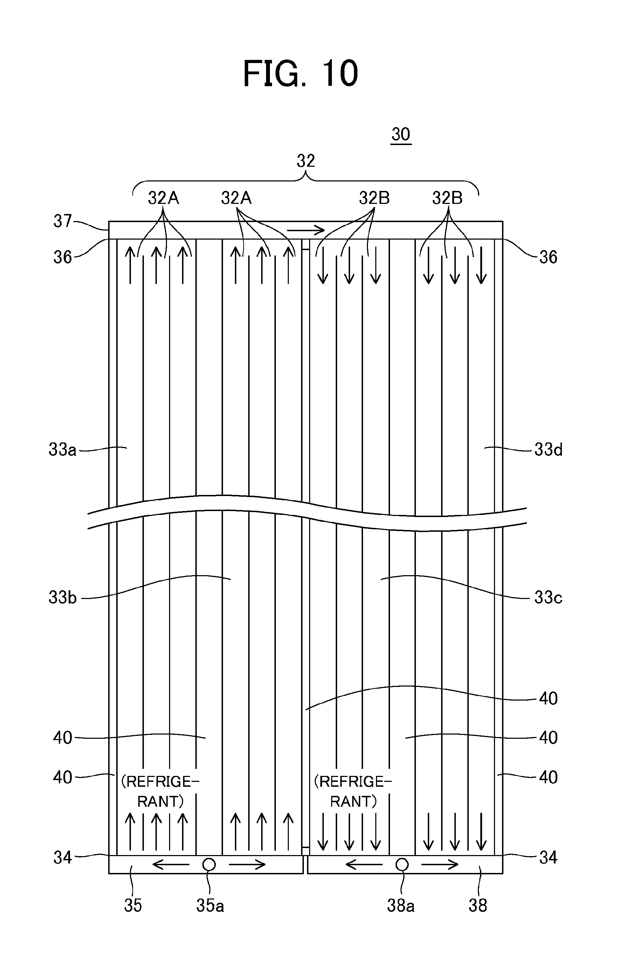

The plate 30 has the plate face 31 serving as the heat-exchange face, and the medium pipe 33 provided substantially in parallel to the plate face 31. The medium pipe 33 has plural planar pipes 33a, 33b, 33c and 33d arranged in parallel in the longitudinal direction of the plate 30. Each of the planar pipes 33a, 33b, 33c and 33d is a flat porous (microchannel) type pipe (heat exchanger) in which plural thin (narrow) flow paths 32 (32A, 32B in Fig. 10) through which refrigerant flows are arranged in parallel along the longitudinal direction of the plate 30. According to this construction, the heat transfer area of the medium pipe 33 can be increased and thus the plate 30 can be cooled efficiently.

As shown in Figs. 9 and 10, one end sides 34 of the planar pipes 33a and 33b are connected to an inlet header 35. The inlet header 35 is formed in a substantially cylindrical shape and has a hollow structure. A pipe connection portion 35a to which the pipe passage 50a is connected is provided at the substantially center portion in the longitudinal direction of the inlet header 35. One end sides 34 of the planar pipes 33c and 33d are connected to an outlet header 38 which is provided in juxtaposition with the inlet header 35 in the short-side direction. The outlet header 38 is formed in a substantially cylindrical shape and has a hollow structure. The outlet header 38 has a pipe connection portion 38a which is provided at the substantially center portion in the longitudinal direction of the outlet header 38 and to which the pipe passage 50b is connected.

An intermediate header 37 is connected to the other end sides 36 of the planar pipes 33a, 33b, 33c, 33d. The intermediate header 37 is formed in a substantially cylindrical shape and has a hollow structure as in the case of the inlet header 35 and the outlet header 38.

heaters 40 are arranged in parallel along the longitudinal direction of the plate 30 in the neighborhood of the planar pipes 33a, 33b, 33c and 33d, whereby the medium pipe 33 and the heaters 40 are integrally arranged within the same plane in the thin planar plate 30. When the outdoor air temperature is low or the like, it is required to heat the electric cells 11 in order to prevent reduction in output of the battery module 1. When the electric cells 11 are heated, current is supplied to the heaters 40 to heat the plate 30 and the heat is transferred to the electric cells 11 to heat the electric cells 11.

The pipe passage 50a and the pipe passage 50b are provided at the lower side of the plate 30. The pipe passages 50a and 50b are formed in an U-shape, and meandered along the longitudinal direction of the plate 30. One end of the pipe passage 50a intercommunicates with the medium inlet pipe 51 at the lower side of the plate 30, and the other end thereof is connected to the pipe connection portion 35a of the inlet header 35 provided to the plate 30. Furthermore, one end of the pipe passage 50b intercommunicates with the medium outlet pipe 52 at the lower side of the plate 30, and the other end thereof is connected to the pipe connection portion 38a of the outlet header 38 provided to the plate 30.

According to this construction, the assembled battery 10 and the battery cooling/heating structure 2 for cooling/heating the assembled battery 10 are collectively mounted in the case 3 of the battery module 1. Therefore, in the work of fixing the battery module 1, the medium inlet/outlet pipes 51 and 52 extending from the case 3 can be connected to the refrigerant pipes 51a and 52a and thus the fixing work of the battery module 1 can be simplified.

Furthermore, the trap 50 having the pipe passage provided to the lower portion of the plate 30 is connected to the pipe connection portions 35a and 38a of the plate 30, and all of these elements are collectively accommodated in the case 3. Therefore, it is unnecessary to provide a trap structure for pooling condensed refrigerant medium at the outside of the case 3, the routing workability of the pipes can be enhanced, and condensed refrigerant medium can be prevented from being pooled in the plate 30. Accordingly, the heating efficiency when the plate 30 is heated can be enhanced.

### <Fourth Embodiment>

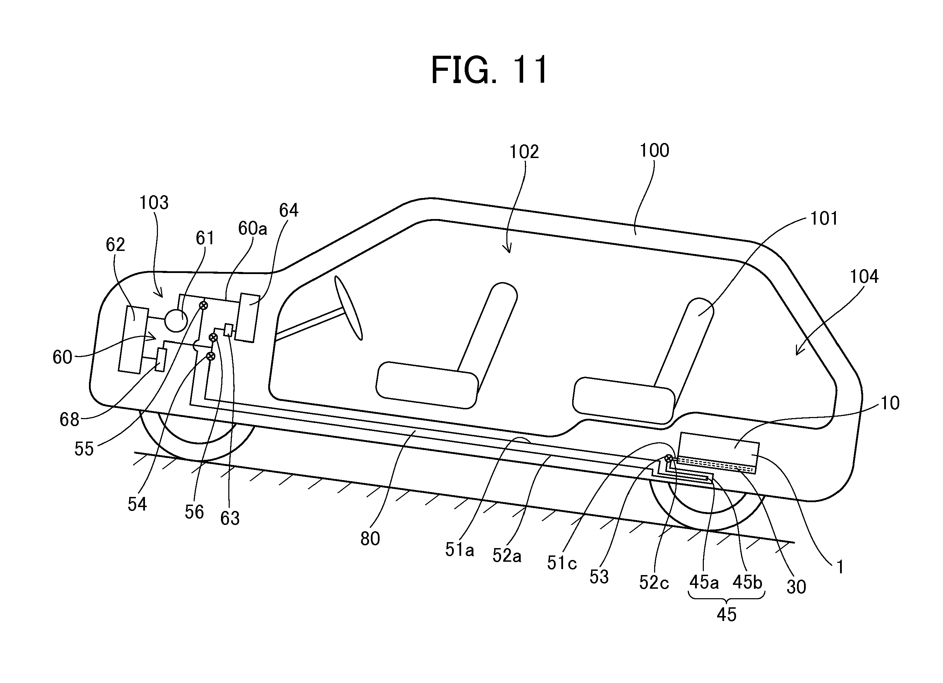

Fig. 11 shows a vehicle such as a hybrid vehicle, an electric vehicle or the like which stops on an ascending slope. In the following description, the same elements as described with reference to the third embodiment are represented by the same reference numerals, and the description thereof is omitted.

As compared with the embodiment of Fig. 1, this embodiment is different in the arrangement position of the trap 45. The trap 45 is not disposed in the battery module 1, but it is disposed in the medium inlet pipe 51c and the medium outlet pipe 52c.

The medium inlet pipe 51c and the medium outlet pipe 52c are connected to the plate 30 provided to the battery module 1, and extend out from the battery module 1 substantially in parallel to the plate 30. The medium inlet pipe 51c and the medium outlet pipe 52c intercommunicate with the trap 45 comprising the pipe passages 45a and 45b which are provided at the lower side of the battery module 1 so as to meander along the longitudinal direction of the bottom surface of the battery module 1. The pipe passages 45a and 45b are connected to the refrigerant pipes 51a and 52a provided at the higher positions than the trap 45 at the front side of the battery module 1.

According to this construction, the trap 45 for pooling the refrigerant medium re-condensed in the refrigerant pipe is provided at the outside of the battery module 1. Therefore, the battery module 1 can be miniaturized and the installation of the battery module 1 can be enhanced.

### <Fifth Embodiment>

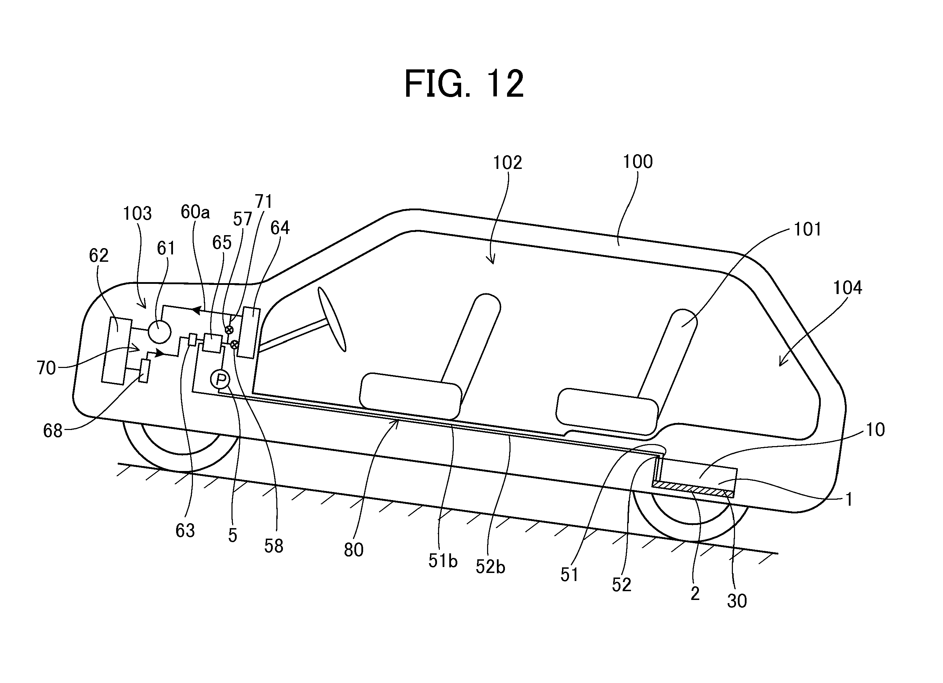

Fig. 12 shows a vehicle 100 such as a hybrid vehicle, an electric vehicle or the like which stops on an ascending slop. In the following description, the same elements as described with reference to the first embodiment are represented by the same reference numerals, and the description thereof is omitted.

An in-vehicle mount type air-conditioning refrigeration cycle 70 comprises a compressor 61, a condenser 62, a receiver tank 68, a pressure-reducing device, a heat-exchanger 65 and an evaporator 64 which are connected to one another through a refrigerant pipe 60a. A bypass pipe 71 is connected between the heat exchanger 65 and the evaporator 64, and the bypass pipe 71 is connected to the refrigerant pipe 60a at the downstream side of the evaporator 64. The bypass pipe 71 has a fourth opening/closing valve 57. Furthermore, a fifth opening/closing valve 58 is provided to the refrigerant entrance of the evaporator 64. In the refrigeration cycle 70, the heat exchanger 65 is provided at the downstream side of the pressure-reducing device 63, and liquid refrigerant of low temperature and low pressure flows through the heat exchanger 65.

Refrigerant pipes 51b and 51b are connected to the heat exchanger 65, and medium inlet/outlet pipes 51 and 52 intercommunicating with the plate 30 are connected to the refrigerant pipes 51b and 52b, thereby forming a cooling cycle 81 of the batterymodule 1 . A pump 5 is connected to the refrigerant pipe 51b, and refrigerant medium in the cooling cycle 81 is circulated through the pump 5.

Accordingly, the refrigerant circulating in the refrigeration cycle 70 and the refrigerant medium circulating in the cooling cycle 81 of the battery module 1 are heat-exchanged with each other in the heat exchanger 65, and the refrigerant medium of low temperature which is cooled by the refrigerant circulating in the refrigeration cycle 70 is supplied through the refrigerant pipes 51b and 52b to the plate 30 and made to flow through the plate 30 to cool the plate 30, thereby cooling the battery module 1.

Next, the operation of this embodiment will be described.

Under cooling operation of the vehicle interior 102, the operation of the pump 5 is stopped, and the cooling operation is executed. Refrigerant circulating in the refrigeration cycle 70 is compressed in the compressor 61 and becomes gas refrigerant of high temperature and high pressure. Then, the gas refrigerant is condensed in the condenser 62 and becomes liquid refrigerant of low temperature and high pressure. The liquid refrigerant is passed through the receiver tank 68 to the pressure-reducing device 63 and becomes liquid refrigerant of low temperature and low pressure. The liquid refrigerant flows through the heat exchanger 65, and absorbs heat of the vehicle interior 102 in the evaporator 64 to be evaporated. The evaporated refrigerant is sucked into the compressor 61 again.

When it is required to cool the plate 30 under cooling operation, the pump 5 is driven to circulate the refrigerant medium in the cooling cycle 81 through the plate 30 and the heat exchanger 65. The refrigerant circulating in the in-vehicle mount type air-conditioning refrigeration cycle 70 and the refrigerant medium circulating in the cooling cycle 81 of the battery module 1 are heat-exchanged with each other in the heat exchanger 65, and the refrigerant medium circulating in the cooling cycle 81 is reduced in temperature. The refrigerant medium which is reduced in temperature while passing through the heat exchanger 65 flows into the plate 30 through the pump 5, thereby cooling the plate 30. The refrigerant circulating in the refrigeration cycle 70 absorbs heat in the heat exchanger 65 and the evaporator 64, and it is sucked into the compressor 61 under a superheat state.

When it is required to cool the plate 30 at the stop time of the cooling operation, the fourth opening/closing valve 57 is opened, the fifth opening/closing valve 58 is closed and the pump 5 is driven. When the compressor 61 of the refrigeration cycle 70 is driven, the refrigerant passes through the condenser 62, the receiver tank 68 and the first pressure-reducing device 63 into the heat exchanger 65, flows through the bypass pipe 71 and then is sucked into the compressor 61 again. Furthermore, the refrigerant medium in the cooling cycle 81 circulates through the plate 30 and the heat exchanger 65. The refrigerant medium is heat-exchanged with the refrigerant circulating in the refrigeration cycle 70 in the heat exchanger 65, whereby the temperature of the refrigerant medium is reduced.

According to this construction, under cooling operation, a part of the refrigerant medium circulating in the in-vehicle mount type air-conditioning refrigeration cycle 70 is not distributed to the cooling cycle 80 of the battery, but heat-exchangedwith the refrigerant medium circulating through the cooling cycle 81 of the battery module 1 in the heat exchanger 65 to reduce the temperature of the refrigerant medium circulating in the cooling cycle 81. Accordingly, the refrigerant medium is circulated in the plate 30 while the temperature thereof is low, whereby the plate 30 can be cooled. Furthermore, the refrigerant circulating in the refrigeration cycle 70 is passed through the heat exchanger 65 and the evaporator 64, and set to a superheat state before sucked into the compressor 61. Therefore, occurrence of liquid compression in the compressor 61 can be prevented, and the energy efficiency of the refrigeration cycle 70 can be enhanced.

Therefore, as compared with a case where a part of the refrigerant circulating in the refrigeration cycle 70 is distributed to the plate 30 to cool the plate 30, not only the load of the refrigeration cycle 80 can be reduced, but also the energy efficiency of the refrigeration cycle 70 can be enhanced, so that the plate 30 can be efficiently cooled.

Furthermore, when it is required to cool the plate 30 at the stop time of the cooling operation, the refrigerant in the refrigeration cycle 70 passes through the bypass pipe 71 while bypassing the evaporator 64. Therefore, heat in the vehicle interior 102 is not absorbed and thus cold air is not needlessly blown into the vehicle interior 102.

### <Sixth Embodiment>

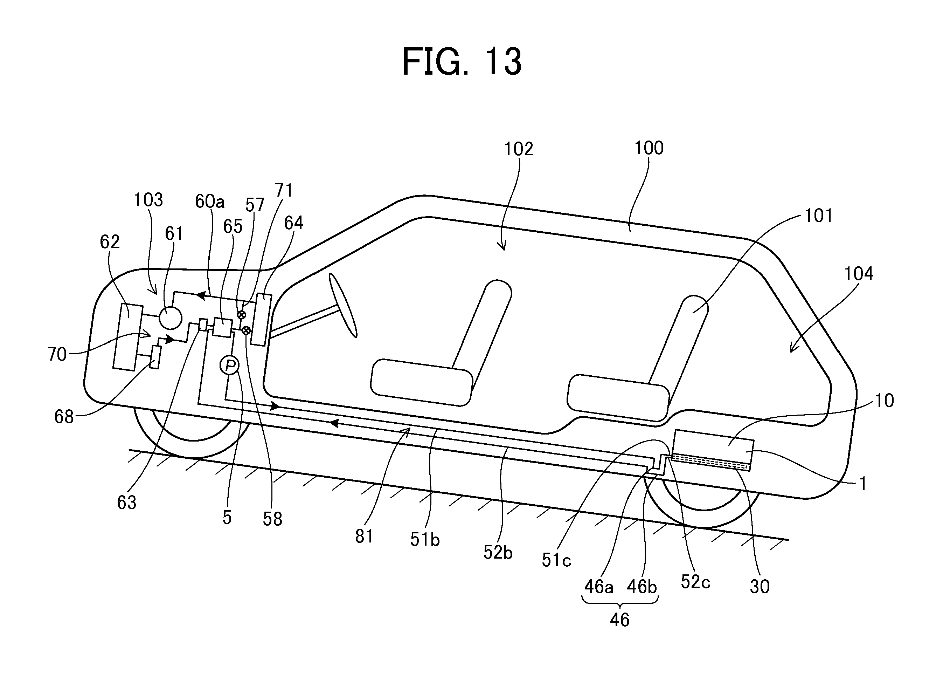

Fig. 13 shows a vehicle 100 such as a hybrid vehicle, an electric vehicle or the like which stops on an ascending slope. In the following description, the same elements as described with reference to the third embodiment, the fourth embodiment or the fifth embodiment are represented by the same reference numerals, and the description thereof is omitted.

As compared with the embodiment shown in Fig. 12, this embodiment is different in the arrangement position of the trap 46. The trap 46 is not disposed in the battery module 1, but disposed in the medium inlet pipe 51c and the medium outlet pipe 52c.

The medium inlet pipe 51c and the medium outlet pipe 52c are connected to the plate 30 provided to the battery module 1, and extends out from the battery module 1 substantially in parallel to the plate 30. The medium inlet pipe 51c and the medium outlet pipe 52c are connected to the pipe passages 46a and 46c at the outside of the battery module 1. The pipe passages 46a and 46b are formed to be substantially U-shaped, and one ends thereof are connected to the medium inlet pipe 51c and the medium outlet pipe 52c. The other ends of the pipe passages 46a and 46b are connected to the refrigerant pipes 51b and 52b, and extend downwardly in the substantially vertical direction from the connection portions thereof, thereby forming the trap 46.

According to this construction, the trap 46 for pooling the refrigerant medium is provided at the outside of the battery module 1. Therefore, the battery module 1 can be miniaturized, and the installation of the battery module 1 can be enhanced.

In the fifth embodiment and the sixth embodiment, the temperature of the refrigerant medium circulating in the cooling cycle 81 is varied in the heat exchanger 65 and the plate 30, and the plate 30 is cooled by using sensible heat of the refrigerant medium. When the plate 30 is heated by the heater 40, the refrigerant medium in the plate 30 is increased in temperature and thus the specific gravity thereof is reduced. The specific-gravity reduced refrigerant medium ascends to any one of the medium inlet/outlet pipes 51 and 52 and gets out from the plate 30 when the trap 50 (see Fig. 9) or 46 is not provided. In connection with this, low-temperature refrigerant medium enters the plate 30 from the other medium inlet pipe 51 or medium outlet pipe 52. Therefore, the heating efficiency of the plate 30 is reduced.

In the fifth embodiment and the sixth embodiment, the trap 50 or the trap 46 are provided at the lower side of the plate 30 so as to intercommunicate with the plate 30. Therefore, even when the specific gravity of the refrigerant medium in the plate 30 is reduced by heating of the plate 30, the refrigerant medium can be prevented from moving by the trap 50 or the trap 46, and thus the heating efficiency is prevented from decreasing.

### <Seventh Embodiment>

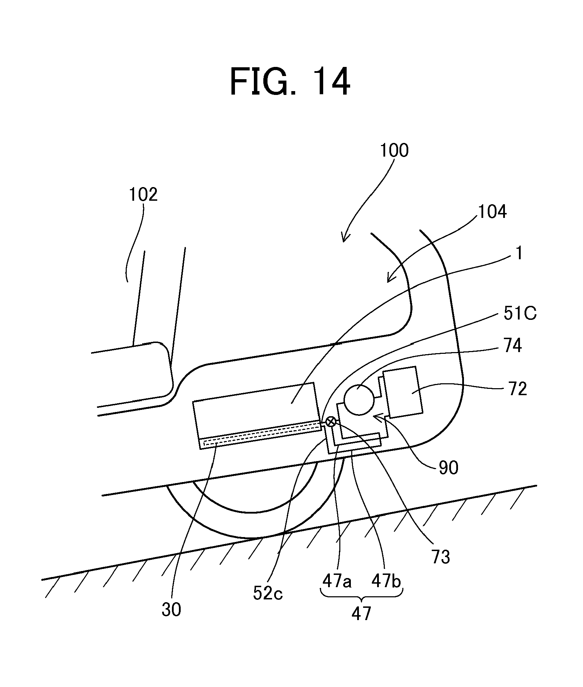

Fig. 14 shows a vehicle 100 such as a hybrid vehicle, an electric vehicle or the like which stops on a descending slop. In the following description, the same elements as described with reference to the third embodiment or the fourth embodiment are represented by the same reference numerals, and the description thereof is omitted.

The refrigeration cycle 90 according to this embodiment is not an in-vehicle mount type air-conditioning refrigeration cycle, but a refrigeration cycle 90 which is exclusively provided to the battery cooling/heating structure 2. The refrigeration cycle 90 is installed under floor in the trunk room or the like so as to be adjacent to the battery module provided under floor at the rear side of the rear seat 101. According to this construction, the refrigeration cycle 90 is disposed to be adjacent to the battery cooling/heating structure 2, whereby the pipe can be shortened. Therefore, the routing workability of the refrigerant pipe can be enhanced, and also the thermal loss of the pipe can be reduced, so that the cooling efficiency of the battery cooling/heating structure 2 can be enhanced.

In the refrigeration cycle 90, the compressor 74, the condenser 72 and the pressure-reducing device 73 are connected to the plate 30 through a pipe. The pressure-reducing device 73 is connected to the plate 30 through the medium inlet pipe 51c, and the plate 30 is connected to the compressor 74 through the medium outlet pipe 52c. The plate 30 serves as an evaporator in the refrigeration cycle 90, and refrigerant medium of low temperature is made to flow into the plate 30 to cool the plate 30. The medium inlet pipe 51c and the medium outlet pipe 52c are connected to the pipe passages 47a and 47b, and the pipe passages 47a and 47b form a trap 47 provided at the lower side of the battery module 1.

According to this construction, the plate 30 can be cooled not by using the in-vehicle mount type air-conditioning refrigeration cycle 60 (70), but by using the dedicated refrigeration cycle 90. Therefore, for example when the outdoor air temperature is a temperature at which the in-vehicle mount type air-conditioning refrigeration cycle 60 (70) is not required to be operated, the in-vehicle mount type air-conditioning high-output compressor 61 is not required to be operated to cool the battery module 1. When the battery module 1 is cooled, the low-output compressor 74 of the dedicated refrigeration cycle 90 is driven to cool the plate 30. Therefore, as compared with the case where the compressor 61 of the in-vehicle mount type refrigeration cycle 60 (70) is driven to cool the plate 30, the total energy efficiency of the vehicle 100 can be enhanced. Furthermore, the load of the refrigeration cycle 60 can be reduced, and thus when the outdoor air temperature is high, the plate 30 can be cooled without reducing the air-conditioning efficiency of the vehicle interior 102.

Furthermore, in this construction, the trap 47 may be provided in the battery module 1 as in the case of the third embodiment.

As described above, according to the embodiments, in the cooling/heating structure 2 in which the plate 30 which is integrated with the medium pipe 33 and the heater 40 is brought into contact with the electric cells 11, the refrigerant medium is made to flow through the medium pipe 33 to cool the electric cells 11 and current is supplied to the heater 40 to heat the electric cells 11, the traps 47 having the pipe passages 47a and 47b located at lower positions than the plate 30 is disposed in the pipe connection portions 35a, 38a as the entrance/exit for the medium of the plate 30. Therefore, even when the refrigerant medium remaining in the medium pipe 33 of the plate 30 is evaporated by heat of the electric cells 11 at the stop time of the vehicle 100, discharged to the outside of the plate 30 and cooled to be re-condensed at the outside of the plate 30, the re-condensed refrigerant medium is not returned to the medium pipe 33, but pooled in the trap 50 having the pipe passages 50a and 50b located at lower positions than the plate 30. Furthermore, even when at the heating time of the plate 30, the refrigerant medium remaining in the medium pipe 33 of the plate 30 is evaporated by heat of the heater 40, discharged to the outside of the plate 30, cooled at the outside of the plate 30 and re-condensed, the re-condensed refrigerant medium is not returned to the medium pipe 33, but pooled in the trap 50 having the pipe passages 50a and 50b located at lower positions than the plate 30. Therefore, the refrigerant medium is pooled in the medium pipe 33 of the plate 30, and thus this refrigerant medium does not serve as a thermal load when the plate is heated. Accordingly, the plate 30 can be efficiently heated, and heat is transferred to the electric cells 11, so that the heating efficiency of the electric cells 11 can be enhanced.

Furthermore, according to the above embodiments, the plate 30 is connected to the in-vehicle mount type air-conditioning refrigeration cycle 60 in parallel to the evaporator 64 provided to the refrigeration cycle 60. Therefore, a part of refrigerant medium circulating in the refrigeration cycle 60 is distributed so that refrigerant medium of low temperature can be made to directly flow through the medium pipe 33 of the plate 30. Therefore, the plate 30 can be quickly cooled and the electric cells 11 can be cooled by the simple construction that the plate 30 is connected to the in-vehicle mount type air-conditioning refrigeration cycle 60 in parallel.

Furthermore, according to the above embodiments, the heat exchanger 65 is provided at the lower temperature portion of the in-vehicle mount type air-conditioning refrigeration cycle 70, and the plate 30 is connected to the heat exchanger 64 through a pipe. Therefore, the refrigerant circulating in the in-vehicle mount type air-conditioning refrigeration cycle 70 and the refrigerant circulating in the cooling cycle 81 are heat-exchanged with each other by the heat exchanger 65 to reduce the temperature of the refrigerant medium circulating in the cooling cycle 81, and the plate 30 can be cooled by using this refrigerant medium without distributing a part of the refrigerant medium circulating in the in-vehicle mount type air-conditioning refrigerant cycle 70 to the cooling cycle 81 of the battery module 1. Therefore, the refrigerant medium circulating in the refrigeration cycle 70 flows through the heat exchanger 65 and the evaporator 64, and set to a superheat state before sucked into the compressor 61. Therefore, occurrence of liquid compression in the compressor 61 can be prevented, and the energy efficiency of the refrigeration cycle 70 can be enhanced. Accordingly, as compared with a case where a part of refrigerant medium circulating in the refrigeration cycle 70 is distributed to the plate 30 to cool the plate 30, not only the load of the refrigeration cycle 70 can be reduced, but also the energy efficiency of the refrigeration cycle 70 can be enhanced, whereby the plate 30 can be cooled efficiently.

According to the above embodiments, the battery cooling/heating structure 2 has the dedicated refrigeration cycle 90, and the refrigeration cycle 90 has the compressor 74, the condenser 72 and the pressure-reducing device 73 which are connected to the plate 30 through pipes. Accordingly, in the refrigeration cycle 90, the plate 30 serves as an evaporator. The compressor 74 of the refrigeration cycle 90 is provided to compress only the refrigerant flowing into the plate 30. Therefore, the output of this compressor 74 is lower than the compressor 61 provided to the in-vehicle mount type air-conditioning refrigeration cycle 60, 70, and thus the power required to drive the compressor 74 may be lower. Therefore, when the outdoor air temperature does not require to operate the in-vehicle mount type air-conditioning refrigeration cycle 60 (70), only the refrigeration cycle 90 maybe operated to cool the plate 30. Therefore, the overall energy efficiency of the vehicle 100 can be enhanced. Furthermore, when the outdoor air temperature is high, the plate 30 can be cooled without imposing any load on the refrigeration cycle 60, 70, and thus the air-conditioning efficiency of the vehicle 100 is not reduced.

The refrigeration cycle 90 and the battery cooling/heating structure 2 can be provided to be adjacent to each other. Therefore, the pipe through which the refrigeration cycle 90 and the battery cooling/heating structure 2 are connected to each other can be shortened. Therefore, the routing workability of the refrigerant pipe can be enhanced, the thermal loss of the pipe can be reduced, and the cooling efficiency of the battery cooling/heating structure 2 can be enhanced.

Furthermore, according to this embodiment, the plural electric cells 11 are assembled to form the assembled battery 10, and the assembled battery 10 is accommodated in the case 3 having the side plate 3a and the bottom plate 3b to form the battery module 1. The plate 30 which is integrated with the medium pipe 33 and the heater 40 and brought into contact with each electric cell 11 is disposed inside the case 3, and the medium inlet/outlet pipes 51 and 52 of the plate 30 are disposed to extend to the upper side of the case 3, and the trap 50 having the pipe passages 50a and 50b located at the lower positions than the plate 30 is disposed at the pipe connection portions 35a and 38a as the entrance and exit of the plate 30 for the refrigerant medium. Accordingly, the trap structure for pooling the condensed refrigerant medium is provided in the case 3. Therefore, it is unnecessary to consider the routing of the pipe at the outside of the case 3, and it is prevented that the refrigerant medium is pooled in the medium pipe 33 of the plate 30 and serves as a thermal load when the plate 30 is heated. Accordingly, the routing workability of the pipes of the battery module 1 can be enhanced, and the plate 30 can be heated efficiently, so that the heating efficiency of the electric cells 11 can be enhanced.

According to the above embodiments, the medium pipe 33 has the plural planar pipes 33a, 33b, 33c, 33d, and each of the planar pipes has plural thin (small diameter) flow passages 32 through which the refrigerant medium flows (the cross-sectional shape of each flow passage 32 is not limited to a specific one, and it may be a rectangular shape, a circular shape, an elliptical shape or the like) . Furthermore, one ends of the planar pipes 33a, 33b, 33c, 33d is connected to the inlet header 35 or the outlet header 38 intercommunicating with the trap 50 , and the heaters 40 are disposed at both the sides of each of the planar pipes 33a, 33b, 33c, 33d. Therefore, the plate 30 which is a multi-pass type heat exchanger having plural thin flow passages 32 makes the refrigerant medium flow through the plural thin flow passages, whereby the plate 30 can be efficiently cooled. Furthermore, the plural thin flow paths 32 join together at the inlet header or the outlet header which intercommunicates with the trap 50. Therefore, the refrigerant medium in the thin flow paths 32 is temporarily evaporated, and then re-condensed and pooled in the trap 50. Therefore, the re-condensed refrigerant medium is prevented from being pooled in the thin flow paths 32, so that the refrigerant medium can be prevented from being pooled in the medium pipe 33 and thus serving as a thermal load when the plate 30 is heated. Accordingly, the plate 30 can be efficiently heated. Furthermore, the heaters 40 are arranged at both the sides of each of the planar pipes 33a, 33b, 33c, 33d along the longitudinal direction of the plate 30. Therefore, when the plate 30 is heated, the plate face 30a of the plate 30 can be uniformly heated by using the heaters 40, and the heating efficiency of the electric cells 11 can be enhanced.

The present invention is not limited to the above embodiments, and various modifications may be made without departing from the subject matter of the present invention. In the above embodiments, the first opening/closing valve 54 is provided to the second pressure-reducing device 53 or the pressure-reducing device 73 in series, however, the present invention is not limited to this style. For example, when the second pressure-reducing device 53 or the pressure-reducing device 73 has a fully closing function, the operation of the first opening/closing valve 54 may be executed by using the second pressure-reducing device 53, and the first opening/closing valve 54 may be omitted.

Furthermore, a part of the refrigerant medium circulating in the in-vehicle mount type air-conditioning refrigeration cycle is distributed to the cooling cycle 80 for the battery to cool the plate 30. However, the present invention is not limited to this style. For example, a heat exchanger may be provided to the low temperature portion of the refrigeration cycle 60 so that refrigerant circulating in the refrigeration cycle 60 and refrigerant medium circulating in the cooling cycle 80 for the battery are made to flow through the heat exchanger and heat-exchange each other, whereby the temperature of the refrigerant medium circulating in the cooling cycle is set to a low temperature and the plate 30 is cooled.

Furthermore, each of the pipe passages 50a and 50b constituting the trap 50 is formed in an U-shape, however, this invention is not limited to this style. For example, the pipe passages 50a and 50b may be provided by meandering a pipe at plural times substantially in parallel to the plate 30. The other pipe construction, etc. may be freely changed.

## Claims

1. A battery cooling/heating structure (2) having a plate (30) that is brought into contact with a battery (10) to cool and heat the battery, comprising:
a medium pipe (33) of plural arrays (33a, 33b, 33c, 33d) that are arranged substantially in parallel on the plate and through which refrigerant medium flows to cool the battery, each of the plural arrays having a straight portion; and
a heater (40) that is disposed between the straight portions of the plural arrays of the medium pipe and to which current is supplied to heat the battery through the plate, the medium pipe and the heater being integrally arranged within the same plane of the plate.

2. The battery cooling/heating structure according to claim 1,further comprising a trap (50) that is disposed at entrance/exit (35a, 38a) of the plate for the refrigerant medium and has a pipe passage (50a, 50b) located at a lower position than the plate.

3. The battery cooling/heating structure according to claim 1 or 2, further comprising heater holding members (41) arranged at equal intervals on the back surface of the plate, wherein each of the medium pipes is disposed between adjacent heater holding members, and the heater is held by each of the heater holding members.

4. The battery cooling/heating structure according to any one of claims 1 to 3, further comprising an in-vehicle mount type air-conditioning refrigeration cycle (60, 70) having an evaporator (64), wherein the plate is connected to the evaporator of the refrigeration cycle in parallel through a pipe.

5. The battery cooling/heating structure according to any one of claims 1 to 4, further comprising a dedicated refrigeration cycle (90) connected to the plate through a pipe, wherein the plate serves as an evaporator for the dedicated refrigeration cycle .

6. The battery cooling/heating structure according to any one of claims 1 to 5, further comprising an opening/closing valve (54, 55) at entrance/exit of the plate for the refrigerant medium.

7. The battery cooling/heating structure according to any one of claims 1 to 6, wherein the medium pipe is disposed in a meandering form.

8. The battery cooling/heating structure according to any one of claims 1 to 7, further comprising an in-vehicle mount type air-conditioning refrigeration cycle (60,70)having a heat exchanger provided at a low temperature portion thereof, wherein the plate is connected to the heat exchange (65) through a pipe.

9. A battery module having an assembled battery constructed by assembling a plurality of electric cells (11), and a case (3) having a side plate and a bottom plate in which the assembled battery is mounted, comprising:
a single plate (30) that is disposed in the case so as to be brought into contact with the battery;
amediumpipe (33) of plural arrays (33a, 33b, 33c, 33d) that have straight portions and arranged substantially in parallel on the plate; and
a heater disposed between the straight portions of the medium pipe, the medium pipe and the heater being integrally arranged within the same plane of the plate, whereby refrigerant medium is made to flow through the medium pipe to cool the battery through the plate, and current is supplied to the heater to heat the battery through the plate.

10. The battery module according to claim 9, further comprising a trap (50) that is disposed at entrance/exit of the plate for the refrigerant medium and has a pipe passage (50a, 50b) located at a lower position than the plate, wherein the plate is disposed in the case so as to be brought into contact with each of the electric cells, and inlet/outlet pipes (51, 52) of the plate for the refrigerant medium are designed to extend upwardly.

11. The battery module according to claim 9 or 10, wherein the medium pipe has a plurality of planar pipes (33a, 33b, 33c, 33d), each of the planar pipes has a plurality of medium flow paths (32) through which refrigerant medium flows, one end of each of the planar pipes is connected to an inlet header (35) or outlet header (38) intercommunicating with the trap, and the heater is disposed in the neighborhood of each of the planar pipes.
